# EUROPEAN PATENT APPLICATION

(11) **EP 0 681 405 A1**
(43) Date of publication of application: **08.11.1995**
(21) Application number: 94480034.1
(22) Date of filing: 06.05.1994
(51) Int. Cl.: H04Q 3/00

(54) **System for diverting signalling link traffic in a common channel signalling system**

(71) Applicant: International Business Machines Corporation, Armonk, N.Y. 10504 (US)
(72) Inventor: Angenot, Eric, F-06270 Villeneuve Loubet (FR); Caillaud, Dominique, F-06270 Villeneuve Loubet (FR); Baudrion, Muriel, F-06140 Tourrettes sur Loup (FR); Gastaud, Valérie, F-06220 Golfe Juan (FR)
(74) Representative: Schuffenecker, Thierry

(57) **Abstract**

A method for diverting between two signalling points of a Common Channel Signalling System (SS7) the traffic of a Signalling link that has become unavailable to an alternative signalling link, said method involving the step of separately diverting each signalling message constituting said traffic to another signalling link in accordance with the values of the Signalling Link Selection (SLS) fields associated with said signalling message.

## Description

### Technical field of the invention

This invention relates to data communication in general and more particularly to data communication equipments which conforms the Signalling System 7 specifications. More particularly, the invention relates to a method for diverting between two signalling points of a Common Channel Signalling System (SS7) the traffic of a Signalling link that has become unavailable to alternative signalling links.

### Background art

Common channel signalling system number 7, defined by the CCITT Recommendations, allows the supporting of a large number of applications in telecommunication networks. In particular, it allows the design of systems being optimised for operation in digital telecommunications networks in conjunction with stored program controlled exchanges.

Detailed information related to the SS7 protocol can be found in the corresponding CCITT Recommendations, that is to say Fascicle VI.7, Recommendations Q. 700 to Q. 716, entitled "Specifications of signalling system number7".

An overview of Signalling System number7 can be found in the article "An overview of Signalling System number7", by Abdi R. Modarressi et al, Proceedings of the IEEE, vol. 80, number4, April 1992, page 590.

More details can be found in the document "Common Channel Signalling System Number 7 for ISDN and Intelligent Networks" by Bijan Jabbari, Proceedings of the IEEE, number 2, February 1991, page 155.

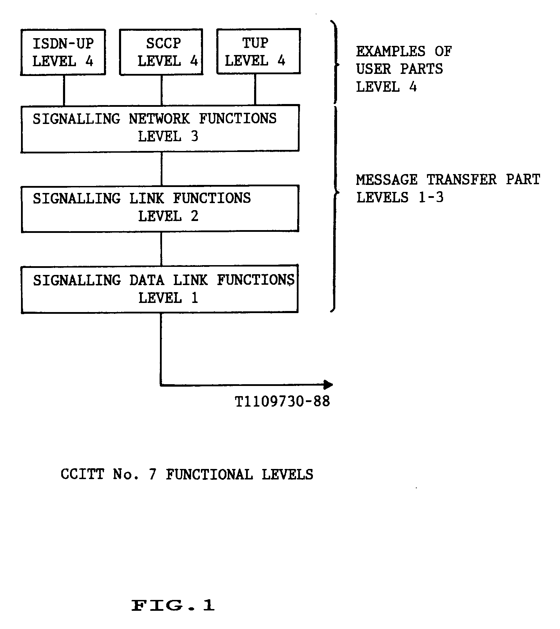

Generally speaking, the CCITT SS7 specification was based on circuit related telephony control requirements. To meet these requirements, four functional levels were specified as illustrated in figure 1: the Message Transfer Part comprising levels 1-3, and the User parts as level 4.

The level 1 of Message Transfer Part defines the physical, electrical and functional characteristics of a signalling data link and the means to access it. The level 2 defines the function and procedures for and relating to the transfer of signalling messages over one individual signalling data link. The level functions together with a level 1 signalling data link as a bearer and provides a signalling link for reliable transfer of signalling messages between two signalling points.

Level 3 in principle defines those transport functions and procedures that are common to and independent of the operation of individual signalling links. Generally speaking, these functions fall into two major categories:
a) Signalling message handling functions. These are functions that, at the actual transfer of the message, direct the message to the proper signalling link or User part.
b) Signalling network management functions. These are functions that, on the basis on predetermined data and information about the status of the signalling network, control the current message routing and configuration of the signalling network facilities. In the event of changes in the status, they also control the reconfigurations and other actions to preserve or restore the normal message transfer capability. The detailed requirements for signalling network functions are given in Recommendations Q.704.

The reconfiguration of the message routing particularly involves the use of two particular procedures: a first change-over procedure which is associated with a corresponding change-back procedure.

The objective of the change-over procedure is to ensure that signalling traffic carried by a link that become unavailable is diverted to the alternative signalling link(s) as quickly as possible while avoiding message loss, duplication or mis-sequencing. For this purpose, the change-over procedure includes buffer updating and retrieval, which are performed before reopening the alternative signalling link(s) to the diverted traffic. Buffer updating consists of identifying all those messages in the retransmission buffer of the unavailable signalling link which have not been received by the far end. This is done by means of a hand-shake procedure, based on changeover messages, performed between the two ends of the unavailable signalling link. Changeover includes the procedures to be used in the case of unavailability of a signalling link, in order to divert the traffic pertaining to that signalling link to one or more alternative signalling links.

Conversely, the change-back procedure is to ensure that signalling traffic is diverted from the alternative signalling links to the signalling link made available as quickly as possible, while avoiding message loss, duplication or mis-sequencing. For this purpose, changeback includes a procedure to control the message sequence. Changeback includes the basic procedures to be used to perform the opposite action to changeover, i.e. to divert traffic from the alternative signalling link(s) to a signalling link which has become available.

However, in order to initiate a change-over procedure, it is necessary to have a mechanism to determine the signalling links which will be used for diverting the traffic conveyed by the signalling link that has become unavailable. Conversely, the change-back procedure also requires that a mechanism be provided for determining which part of the traffic will be diverted to the signalling link that has become available again.

A known method to determine the alternative link is to associate to each link a predetermined backup link which will receive all the traffic which was conveyed by the failing link. This simple reallocation process has the drawback of creating a heavy loading of the backup link which suddenly receives all the traffic which was conveyed by the link that has become unavailable.

### Summary of the invention.

The problem to be solved by the present invention is to provide a method which allows the determination of the alternative signalling links which will be used for diverting the traffic conveyed by a signalling link that has become unavailable in the change-over procedure. Conversely, the problem to be solved by the present invention is to determine the traffic which will be diverted again to a signalling link that has become available again.

This problem is solved by the method according to the present invention which allows the separate allocation of the different subparts of the traffic conveyed by a link in accordance with the value of the Signalling Link Selection (SLS) being associated with each signalling message. This allows the traffic of a link that becomes unavailable to be substantially and uniformly diverted to alternative links.

More preferably, the method according to the invention involves a change-over procedure allowing the signalling traffic carried by a link that has become unavailable to be diverted to another signalling link sharing within the same linkset. The change-over procedure involves the steps of:
- assigning to each link within a particular linkset a number of predetermined values of the SLS fields so that the distribution of the set of SLS, in the ideal conditions where no link is unavailable, is substantially balanced, said predetermined values of the SLS Fields being referred to as a Reference List;
- detecting that a link between the two signalling points has become unavailable;
- determining the list of the links which are still available within the particular linkset where the link failure has been detected, said list being sorted in accordance with the number of SLS values being associated to the link of the list being considered in the current distribution;
- determining the list of the links which are unavailable within said particular linkset,
- entering a first FOR loop for successively processes each element of said list of unavailable links, said first FOR loop comprises the step of determining the Reference List-corresponding to the current unavailable link of said first FOR loop; and
   for each item of said Reference List entering into a second FOR loop, said second FOR loop involving the steps of checking whether the particular link being associated to the current SLS value being considered is the link which unavailability has been detected; and
   if the particular link being associated to the current SLS item being considered in said second FOR loop is the one that has been failed, modifying the distribution of the SLS values to the different links within said linkset so that said current SLS value is affected to the first link that appears in said sorted list of available links, and then reordering said list of available links so that its first element is moved to the last location;
   if the particular link being associated to the current SLS value being considered in said second FOR Loop is not the one that has been failed or after said reordering step,
   proceeding to the processing of the next element of the Reference List being processed in said second FOR loop,
   when the last element of the Reference List has been processed in said second FOR loop, proceeding (10) to the processing of the next element of the list of unavailable list being processed by said first FOR loop.

Therefore, the distribution of the signalling messages are reaffected between the links which are still available within said particular linkset in a substantial balanced fashion.

More preferably, the method further includes a change-back procedure for ensuring a balance reaffectation of the SLS values within said particular linkset when a unavailable link becomes available again. The method involves the steps of:
- detecting that an unavailable link is made available again;
- reaffecting each SLS value listed in said Reference List to the link that has become available again;
- determining the list of the links which are available within said particular linkset;
- determining the list of the links which are still unavailable;
- entering in a first FOR loop for successively processing each item of said list of unavailable links, said first FOR loop involving the steps of:
- for each available link of said list of available links, computing a quota which is calculated by dividing the number of items of the Reference List of the current unavailable link being considered in said first FOR loop by the number of still available links, the quota corresponding to some available links being increased by one so that the total sum of all these quota is equal to the number of SLS values listed in said Reference List;
- entering into a second FOR loop for successively processing each item of the Reference List of the current unavailable link being considered in said first FOR loop, said second FOR loop comprising the steps of
- determining the link within the current distribution which is associated to the current SLS value being considered in the second FOR loop and decreasing (19) the corresponding quota value by 1;
- comparing the quota value corresponding to the link which is associated to the current SLS value to -1; and
- if said quota value appears to be equal to -1, modifying the current distribution so that the current SLS element being considered in said second FOR loop is reaffected to the link which corresponding quota has reached the value -1;
- if said quota appears to be not equal to -1 or after said modification performed in the distribution,
- proceeding to the processing of the next item of the Reference List being processed in said second FOR loop; and
- when the last element of the Reference List has been processed in said second FOR loop, proceeding to the processing of the next element of the list of unavailable list being processed by said first FOR loop.

This allows the distribution to be rendered, when the unavailable links become progressively available again, closer and closer to the ideal distribution configuration which is defined by the set of Reference Lists which are associated to corresponding links.

The invention also provides a Telecommunication equipment which allows to performed the method defined below.

### Description of the drawings.

Figure 1 illustrates the four functional levels of SS7.

Figure 2 is an illustrative flow chart of the change-over process in accordance with the present invention.

Figure 3 is an illustrative flow chart of the change-back process in accordance with the present invention.

### Description of the preferred embodiment of the invention.

The common channel signalling system uses signalling links to convey the signalling messages between two signalling points. A number of signalling links that directly interconnect two signalling interconnected signalling points which are used as a module constitute a signalling link set. The CCITT Recommendations define two distinctive basic cases of load sharing.

The first one consists in the case of a load sharing between two links that belong to the same linkset.

The second one consists in that of two links that do not belong to the same linkset.

The process of the invention which will be described hereinafter with details is only directed to the load sharing of two links within the same linkset.

As mentioned above, the level 3 of the Message Transfer Part of SS7 protocol consists in the signalling network functions which are basically divided into two categories:
- the signalling message handling, and
- the signalling network management.

The former category allows that signalling messages originated by a particular User Part at a signalling point are delivered to the same User Part at the destination point indicated by the sending User Part. The Signalling message handling functions are divided into three distinctive parts. First, there is the message routine function, used at each signalling point to determine the outgoing signalling link on which a message has to be sent towards its destination point. Secondly, the message discrimination function is used at a signalling point to determine whether or not a received message is destined to the point itself. When the signalling point has the transfer capability and a message is not destined to it, that message has to be transferred to the message routing function. At last, the message distribution function, used at each signalling point to deliver the received messages to the appropriate User Part.

A signalling message is an assembly of information, defined at level 3 or 4, pertaining to a call management transaction, etc..., that is transferred as an entity by the message transfer function. Each message contains service information including a service indicator identifying the source User Part and possibly additional information such as an indication whether the message relates to international or national application of the User Part. The signalling information of the message includes the actual user information, such as one or more telephone or data call control signals, management and maintenance information, etc... and information identifying the type and format of the message. It also includes a label that provides information enabling the message to be routed by the level 3 functions and through a signalling network to its destination. This part of the label is referred to as the Routing label. Additionally the label allows the message to be directed at the receiving User Part to the particular circuit, call, management or other transaction to which the message is related. The standard routing label mentioned before has a length of 31 bits. It comprises a Destination Point Code (DPC) which indicates the destination point of the message. The originating point (OPC) indicates the originating point of the message. Additionally a Signalling Link Selection (SLS) field is used where appropriate, in performing load sharing.

The message routing function which is involved in the Signalling message handling generally processes the DPC of the standard routing label in order to determine the linkset for a particular message to be sent. Then, the message routing function uses the SLS of the standard routing label in order to choose the outband link (hereinafter referred to as the Associate link) into this linkset which will be used for actually sending the message. To achieve this, a first table is used for providing the particular linkset which corresponds to a predetermined DPC field. Then, for each particular linkset, an additional table (referred as the Current Distribution) provides the particular link within this linkset which corresponds to a predetermined SLS field. For each link, the list of the different SLS being associated to this link, is called the Current List.

In an ideal configuration, when all the links are supposed to be available, the distribution is arranged so that each link within a particular linkset equally, if possible, the same number of SLS. This ideal arrangement will be referred to as the Reference Distribution. For instance, assuming that the linkset has four distinctive links, and that the SLS field may take 16 different values, the Reference Distribution will be such that each link is associated with four distinctive values of the SLS field. On the contrary, assuming that only three distinctive links exist into a linkset, the Reference Distribution could be as follows:

| SLS | Link |
|---|---|
| 0 | 1 |
| 1 | 2 |
| 2 | 3 |
| 3 | 1 |
| 4 | 2 |
| 5 | 3 |
| 6 | 1 |
| 7 | 2 |
| 8 | 3 |
| 9 | 1 |
| 10 | 2 |
| 11 | 3 |
| 12 | 1 |
| 13 | 2 |
| 14 | 3 |
| 15 | 1 |

In this Reference Distribution, it appears that link number 1 is associated to SLS 0, 3, 6, 9 ,12 and 15 (which will be referred to as the Reference List which is associated to this link), that is to say to 6 different values of the SLS. The two other links (number 2 and 3) are associated to 5 values of the SLS.

The Reference Distribution is a ideal configuration which is determined by the designers of the particular embodiment of the invention.

In addition to the signalling message handling functions, the level 3 of the Message Transfer Part includes the signalling network management functions which provide reconfiguration of the signalling network in the case of failures and to control traffic in case of congestion. The change-over and change-back processes which will be described hereinafter are included in this second category of functions.

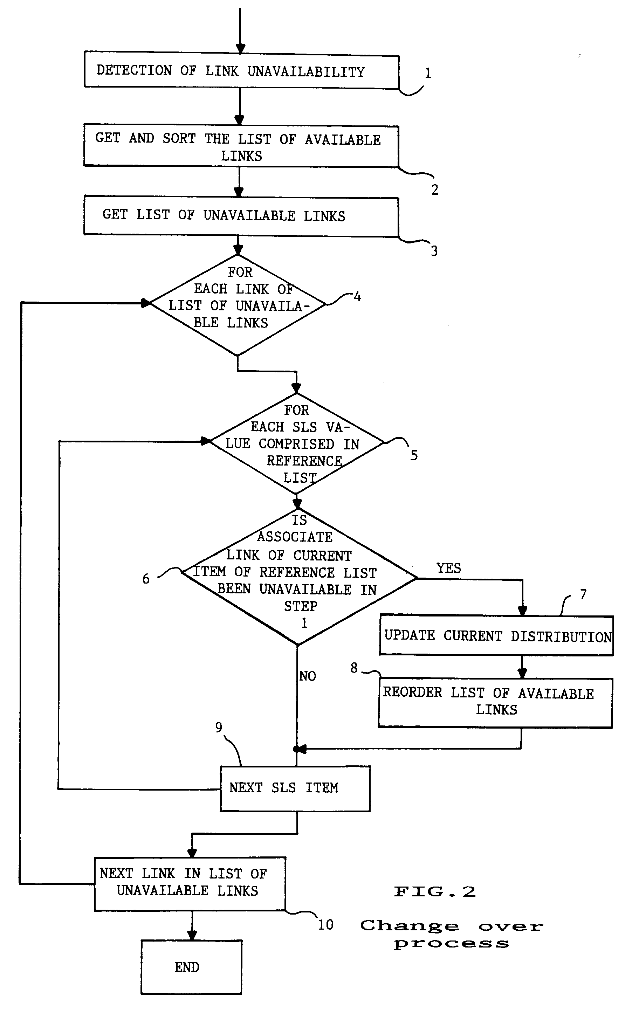

In accordance with the present invention, the change-over process will be detailed in reference with figure 2. The change-over process is initiated with the detection of a link unavailability, step 1. The detection of a signalling link unavailability generally results of a corresponding indication coming from the lever 2 of the Message Transfer Part. Also, such a detection may result from a manual or automatic request obtained from management or the maintenance of the system. Details of the detection of the unavailability of the link may be found in the CCITT Recommendations Q.704, Fascicle VI.7, section 3.2., but will not be more described as there are not part of the invention. Then, step 2, the signalling network management function of the layer 3 determines the list of the links which are still available within the particular linkset where the link failure has been detected. This list is sorted in such a way that its first element is the link that has the smaller number of items within its associated Current List; the second element has the second smaller number of items within its Current List, etc...

With the preceding illustrative example where three distinctive links (respectively called number 1, 2 and 3) shares the 16 values of the SLS. Now assuming that link number 2 becomes unavailable. The Current List of link number 1 comprises the following values of the SLS: 0, 3, 6, 9, 12 and 15; that is to say a set of 6 items. The Current List of link number 3 comprises the following values of the SLS field: 2, 5, 8, 11 and 14; that is to say 5 items. Therefore, the list of the still available links (comprising link 1 and link 3) is sorted so that the first item is link number 3 and the second item is the link number 1.

Then, step 3, the process gets the list of the links which are unavailable. Step 4 is a first FOR loop which will allow the successive process of each current item of the list determined in step 3 as described below.

The first loop includes the determination of the Reference List associated to the current unavailable link being considered. Then a second FOR loop is initiated which is used for processing each SLS item of this Reference List being determined.

The second FOR loop starts with a test, in step 6, to checked whether the current SLS item being considered is associated to a link within the Current Distribution which was the one that was detected to be unavailable by step 1. In this case, the Current Distribution is modified in step 7 so that the current SLS value being considered is affected to the first link being listed in the list of the available links that was determined and sorted in step 2. Next, step 8, the list of available links is reordered in such a way that its first element becomes the last one.

If the test performed in step 6 revealed that the associate link in the Current Distribution of the SLS value being considered was not the link that lastly failed, the process proceeds with step 9 where a next value of the SLS in the Reference List is considered. This next value will be processed in accordance with steps 5, 6, 7 and 8 as was described before.

When the last value of the SLS in the Reference List has been processed, the process proceeds to step 10 where a next link of the list of unavailable links returned from step 3 is processed. This next link becomes the current link which is then processed as was described above in connection with steps 4, 5, 6, 7, 8 and 9.

The process ends with the completion of the processing of the last unavailable link.

With the preceding illustrative example, link number 2 was assumed to become unavailable. Therefore, step 2 of the change-over process returns the sorted list of the available links. This list contains link 3 (which Current List comprises 5 items), and link 1 (which associated Current List comprises 6 items).

Step 3 of the process returns the list of the unavailable link, which, in this case, only comprises the element: link 2.

This unique link will be processed in accordance with steps 4-10. As was mentioned above, the Reference List associated with link number 2 comprises the SLS number 1, 4, 7, 10, 13.

The SLS number 1 is first considered in accordance with step 5. In this very simple example, the Current Distribution, just before the failure of the link, was identical to the Reference Distribution. therefore, the associate link to the SLS number 1 (in the Current Distribution) is link number 2, that is to say the link which failure was detected in step 1. The process therefore proceeds to the steps 7 where the SLS number 1 becomes associated to the first element of the Available Link list, that is link number 3. In accordance with step 8, the latter list is reorder and therefore contains the elements (link number 1, link number 3).

Then the next SLS element in the Reference List is considered. It is SLS number 4. Since the associate link to this SLS number 4 is link number 2 which become unavailable, the process proceeds to step 7 and 8 again. Consequently, SLS number 4 is associated to the first element of the reordered Available Link List, that is to say link number 1. The Available Link List is reordered again in accordance with step 8. This list then appears as follows (link number 3, link number 1).

The next SLS element in the Reference List is again considered, which is SLS number 7. Similarly as before, steps 7 and 8 are performed which lead to SLS number 7 be associated to link number 3 and the Available Link list be reordered again. The latter becomes (link number 1, link number 3).

The next SLS element is then considered, which is SLS number 10. The processing steps 6-9 eventually causes this SLS element to be associated to link number 1.

The last element of the Reference List is then considered, which is SLS number 13. Similarly as before, it is processed in accordance with steps 6, 7 and 8; what results in SLS number 13 be associated with link number 3.

As a conclusion, it appears that the Current Distribution becomes as follows:

| SLS | Link |
|---|---|
| 0 | 1 |
| 1 | 3 |
| 2 | 3 |
| 3 | 1 |
| 4 | 1 |
| 5 | 3 |
| 6 | 1 |
| 7 | 3 |
| 8 | 3 |
| 9 | 1 |
| 10 | 1 |
| 11 | 3 |
| 12 | 1 |
| 13 | 3 |
| 14 | 3 |
| 15 | 1 |

It appears that the distribution of the different SLS between the two links that remain available is balanced since every link is associated to 8 different values of the SLS field. This results from the elementary processing of each SLS value in the Reference List corresponding to each unavailable link, combined with the two different sorting operations which are performed in steps 2 and 8 of the change-over process.

This particular arrangement of the different steps of the change-over process will also facilitates the change-back procedure which will allow a link which becomes available again to be reloaded. The change-back procedure which will be described below will ensure that the reloading procedure will result in a distribution identical to the Reference Distribution in the ideal condition, that is to say when all the links become available again. Temporarily, the change-back procedure will ensure that the loading of all the links remaining available are equally loaded, or close to the equally loading, as long as the ideal conditions have not appear.

The Change-back process begins with step 11 where the layer 3 of the Signalling Network Management function is made aware that a unavailable link can be recovered. Then, step 12, the Reference List of the link that has become available again is considered and each SLS of this list is reaffected to this particular recovered link. The following steps will allow to reaffect additional SLS to this particular link which become available again in order to equitably and partly unload the other available links (which were certainly overloaded). Step 13, the process gets the list of all the available links, regardless of its particular order. Then, step 14, the list of the still unavailable list is considered.

For each current element of this list of unavailable link the following technical steps (referred to as steps 15-23) will be applied by means of a first FOR loop represented by step 15.

The processing of this first FOR loop begins with step 16 where a quota is computed for each available link. In order to compute this quota, the number of SLS elements that are listed in the Reference List of the current unavailable link being considered in step 15 is divided by the number of still available links. The quota for each available link is equal to the integer result of this division. The process increases some of these quota by 1 so that the total sum of all these quota is equal to the number of SLS elements existing in the Reference List being considered. This increase operation may indifferently affect any one of the available link being associated to. Although the choice of the particular available link that has its quota increased by 1 may slightly affect the final distribution of the different SLS to the link, it will appear that, with the process of this invention, the final distribution remains substantially balanced.

Then, step 17, a second FOR loop is initiated for successively processing each item of the Reference List of the current unavailable link being considered.

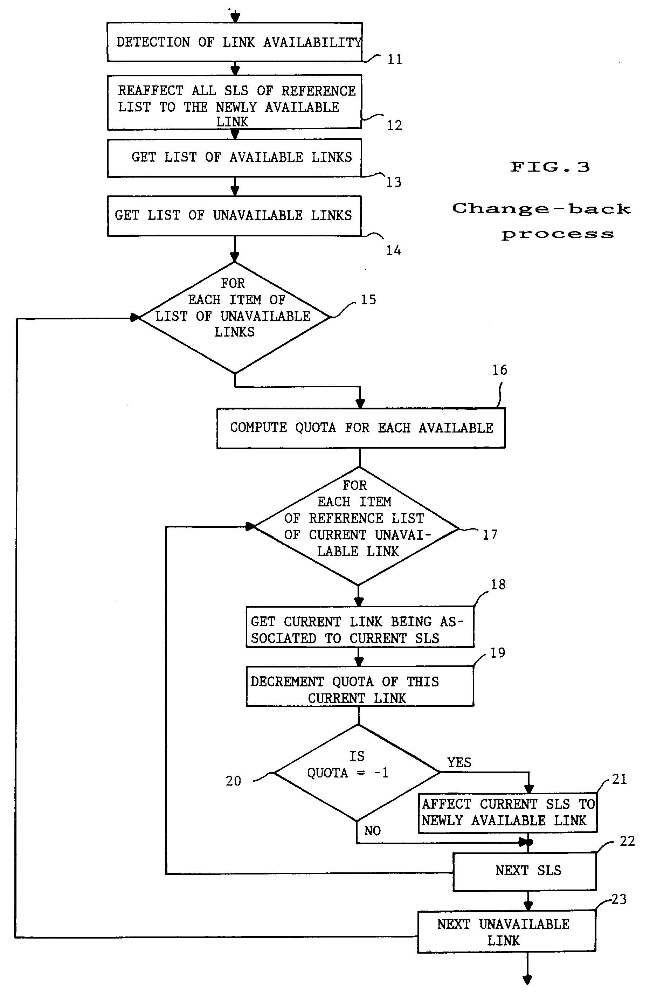

This second FOR loop starts with step 18 where it is determined which link in the Current Distribution is affected to the particular SLS item being currently considered in this second FOR loop. This link is referred to as the current link in the figure 3. Step 19, the quota register associated to this current link is decremented and its contents is then compared to -1, step 20. If the quota has reached the value -1, then the process proceeds to step 21 where the particular SLS element being considered in the FOR loop 17 is associated to the newly available link. The process then proceeds to step 22 which is also reached when the test of step 20 failed. In step 22, the next SLS element in the Reference List corresponding to the current unavailable link is considered and the process goes to step 17 again.

When all the elements in the Reference List have been processed as described before, the process proceeds to step 23 which is the end of the first FOR loop of step 15. The process then proceeds to step 15 again where the next unavailable link is processed again.

At the completion of this change-back process, the newly available link appears to be affected again the SLS elements of its Reference List plus additional SLS elements which were directed from other available link.

Let us consider the following illustrative example.

Suppose a distribution of the 16 SLS elements between 4 distinctive links: links number 1 to 4.

The Distribution Reference is designed as follows.

| SLS | link |
|---|---|
| 0 | 1 |
| 1 | 2 |
| 2 | 3 |
| 3 | 4 |
| 4 | 1 |
| 5 | 2 |
| 6 | 3 |
| 7 | 4 |
| 8 | 1 |
| 9 | 2 |
| 10 | 3 |
| 11 | 4 |
| 12 | 1 |
| 13 | 2 |
| 14 | 3 |
| 15 | 4 |

Therefore, the Reference List are the following:
- Link 1:: SLS0, SLS4, SLS8, SLS12
- Link 2:: SLS1, SLS5, SLS9, SLS13
- Link 3:: SLS2, SLS6, SLS10, SLS14
- Link 4:: SLS3, SLS7, SLS11, SLS15

Let assume that the change-back procedure is applied when both links 1 and 4 are available and link 2 becomes available again.

Prior to the instant where link 2 becomes available, the Current Distribution is as follows:

| SLS | Link |
|---|---|
| 0 | 1 |
| 1 | 4 |
| 2 | 1 |
| 3 | 4 |
| 4 | 1 |
| 5 | 1 |
| 6 | 4 |
| 7 | 4 |
| 8 | 1 |
| 9 | 4 |
| 10 | 4 |
| 11 | 4 |
| 12 | 1 |
| 13 | 1 |
| 14 | 1 |
| 15 | 4 |

Upon the detection of the availability of link 2, the latter is affected the SLS which are defined in its Reference List, that is say receives SLS1, SLS5, SLS9 and SLS13 in accordance with step 12.

Then, step 13, the list of available links is determined which appears to comprise link 1, 2 and 4.

Then, step 14, the list of unavailable links is also determined which appears to only include link 3.

Then the first element (and unique in this example) of the list of unavailable links is considered in the first FOR loop of step 15. This element is link 3.

In accordance with step 16, a quota is computed for each available links. Since Reference List of the link number 3 includes 4 elements, and since there appears to be three available link, step 16 lead to the division of 4 by 3 which makes 1 plus a remaining part also equal to 1. Therefore, each available link is affected a corresponding quota as follows:

Each link quota is equal to 1 and link 1 quota, for instance, is incremented by 1, so the quota of link 1 is chosen to be equal to 2; The quota of link 2 is chosen to be equal to 1; and the quota of link 4 is fixed to 1.

It appears that the sum of the quota is equal to 4, which is the number of items in the Reference List being associated to the current unavailable link, that is to say link 3.

Then, the second FOR loop of step 17 is applied for each element of the Reference list of the considered unavailable link, that is to say link number 3.

The first element of the Reference List of link 3 is SLS element number 2.

Step 18 returns the link in the current distribution which is associated to this SLS element number 2. This link appears to be link 1. The quota value of link 1 is decremented in accordance with step 19, and its value is then equal to 1. The test which is performed in step 20 therefore fails. The process then goes to step 22 where the next SLS element in the Reference List associated to the current unavailable link (ie link number 3) is considered.

The second SLS element of the Reference List of link 3 is SLS6. The link which is associated to the latter SLS element in the Current Distribution is determined in step 18 as before. This link is determined as link 4. The corresponding quota is then decreased by 1 and its contents therefore reaches the value 0. Consequently, the test of step 20 fails again, what results in the next value of the SLS element in the Reference List being processed again.

The third SLS element of the Reference List of link 3 is SLS10. The link which is associated to the latter SLS element in the Current Distribution is determined as before in step 18. It appears to be link number 4. The corresponding quota, which is currently equal to 0, is then reduced by 1 in accordance with step 19. This results in the test of step 20 to success. As a consequence, the process proceeds to step 21 where the SLS element being considered, that is SLS element 10, is reassociated to the newly available link, that is to say link number 2. Then, the process proceeds to the NEXT step 22 in order to compute the next (and last) SLS element of the Reference List being considered.

The fourth SLS element of the Reference List of link 3 is SLS14. The link which is associated to the latter SLS element in the Current Distribution is determined in step 18 as before. This link appears to be link 1. The corresponding quota is then decreased by 1 and its contents therefore reaches the value 0. Consequently, the test of step 20 fails again.

From now, all the elements of the Reference List have been processed, and the process proceeds to step 23 which is the NEXT step of the first FOR loop step 15. Since link 3 was the only unavailable link, the FOR loop also completes and the change-back procedure eventually leads to the following distribution:

| SLS | Link |
|---|---|
| 0 | 1 |
| 1 | 2 |
| 2 | 1 |
| 3 | 4 |
| 4 | 1 |
| 5 | 2 |
| 6 | 4 |
| 7 | 4 |
| 8 | 1 |
| 9 | 2 |
| 10 | 2 |
| 11 | 4 |
| 12 | 1 |
| 13 | 2 |
| 14 | 1 |
| 15 | 4 |

It therefore appears that the process according to the present invention allows the individual reallocation of each SLS in order to provide a load distribution which is as balanced as possible between the different available links.

## Claims

1. Method for diverting between two signalling points of a Common Channel Signalling System (SS7) the traffic of a Signalling link that has become unavailable to an alternative signalling link, said method involving the step of separately diverting each signalling message constituting said traffic to another signalling link in accordance with the values of the Signalling Link Selection (SLS) fields associated with said signalling message.

2. Method according to claim 1 characterized in that it involves a change-over procedure allowing the signalling traffic carried by a link that has become unavailable to be diverted to another signalling link sharing the same linkset than said unavailable link, said change-over procedure involving the steps of:
- assigning to each link within a particular linkset a number of predetermined values of the SLS fields so that the distribution of the set of SLS, in the ideal conditions where no link is unavailable, is substantially balanced, said predetermined values of the SLS Fields being referred to as a Reference List;
- detecting (1) that a link between the two signalling points has become unavailable;
- determining (2) the list of the links which are still available within the particular linkset where the link failure has been detected, said list being sorted in accordance with the number of SLS values being associated to the link of the list being considered in the current distribution;
- determining (3) the list of the links which are unavailable within said particular linkset,
- entering a first FOR loop (4) for successively processes each element of said list of unavailable links, said first FOR loop comprises the step of determining the Reference List corresponding to the current unavailable link of said first FOR loop; and
for each item of said Reference List entering into a second FOR loop (5), said second FOR loop involving the steps of checking whether the particular link being associated to the current SLS value being considered is the link which unavailability has been detected; and
if the particular link being associated to the current SLS item being considered in said second FOR loop is the one that has been failed, modifying (7) the distribution of the SLS values to the different links within said linkset so that said current SLS value is affected to the first link that appears in said sorted list of available links, and then reordering (8) said list of available links so that its first element is moved to the last location;
if the particular link being associated to the current SLS value being considered in said second FOR Loop is not the one that has been failed or after said reordering step,
proceeding (9) to the processing of the next element of the Reference List being processed in said second FOR loop,
when the last element of the Reference List has been processed in said second FOR loop, proceeding (10) to the processing of the next element of the list of unavailable list being processed by said first FOR loop, whereby
the distribution of the signalling message is reaffected between the links which are still available within said particular linkset.

3. Method according to claim 2 characterized in that it further includes a change-back procedure for ensuring a balance reaffectation of the SLS values within said particular linkset when a unavailable link becomes available again, said method further involving the steps of:
- detecting (11) that an unavailable link is made available again;
- reaffecting (12) each SLS value listed in said Reference List to the link that has become available again;
- determining (13) the list of the links which are available within said particular linkset;
- determining (14) the list of the links which are still unavailable;
- entering (15) in a first FOR loop for successively processing each item of said list of unavailable links, said first FOR loop involving the steps of:
- for each available link of said list of available links, computing (16) a quota which is calculated by dividing the number of items of the Reference List of the current unavailable link being considered in said first FOR loop by the number of still available links, the quota corresponding to some available links being increased by one so that the total sum of all these quota is equal to the number of SLS values listed in said Reference List;
- entering (17) into a second FOR loop for successively processing each item of the Reference List of the current unavailable link being considered in said first FOR loop, said second FOR loop comprising the steps of
- determining (18) the link within the current distribution which is associated to the current SLS value being considered in the second FOR loop and decreasing (19) the corresponding quota value by 1;
- comparing (20) the quota value corresponding to the link which is associated to the current SLS value to -1; and
- if said quota value appears to be equal to -1, modifying (21) the current distribution so that the current SLS element being considered in said second FOR loop is reaffected to the link which corresponding quota has reached the value -1;
- if said quota appears to be not equal to -1 or after said modification performed in the distribution,
- proceeding (22) to the processing of the next item of the Reference List being processed in said second FOR loop; and
- when the last element of the Reference List has been processed in said second FOR loop, proceeding (23) to the processing of the next element of the list of unavailable list being processed by said first FOR loop, whereby
the distribution of the signalling messages is reaffected between the links which are still available within said particular linkset.
